# EUROPÄISCHE PATENTANMELDUNG

(11) **EP 2 199 004 A1**
(43) Veröffentlichungstag der Anmeldung: **23.06.2010**
(21) Anmeldenummer: 08105988.3
(22) Anmeldetag: 16.12.2008
(51) Int. Cl.: B23K 9/095, B23K 9/10, G10K 15/04, H04R 23/00

(54) **Verfahren und Vorrichtung zum Lichtbogenschweißen oder Lichtbogenlöten mit kodierter Information im Verlauf eines Wechselstromes**

(71) Anmelder: EWM Hightec Welding GmbH, 56271 Mündersbach (DE)
(72) Erfinder: Szczesny, Michael, 56235 Ransbach-Baumbach (DE)
(74) Vertreter: Cohausz & Florack

(57) **Zusammenfassung**

Die vorliegende Erfindung betrifft eine Vorrichtung zum Lichtbogenschweißen oder Lichtbogenlöten mit einem Leistungsteil (1) und einer Modulatorschaltung (7), die konfiguriert ist, dem von dem Leistungsteil (1) bereitgestellten Lichtbogenstrom einen Wechselstrom mit einer im hörbaren Bereich liegenden Frequenz zu überlagern, sowie ein Verfahren zum Schweißen oder Löten. Dabei ist im Verlauf des Wechselstroms eine Information codiert.

## Beschreibung

Die vorliegende Erfindung betrifft eine Vorrichtung zum Lichtbogenschweißen oder Lichtbogenlöten mit einem Leistungsteil und einer Modulatorschaltung, die konfiguriert ist, dem von dem Leistungsteil bereitgestellten Lichtbogenstrom einen Wechselstrom mit einer im hörbaren Bereich liegenden Frequenz zu überlagern sowie ein Verfahren zum Schweißen oder Löten mit einer solchen Vorrichtung.

Vorrichtungen dieser Art sind bekannt. Sie werden für unterschiedliche Schweiß- oder Lötaufgaben eingesetzt.

Zu den Lichtbogenschweißverfahren gehören beispielsweise das Plasmaschweißen, das Wolfram-Inertgasschweißen (WIG-Schweißen) und das Metallschutzgasschweißen (MSG-Schweißen). Letztere Gruppe von Verfahren ist mit dem Metall-Inertgasschweißen (MIG-Schweißen) und dem Metall-Aktivgasschweißen (MAG-Schweißen)in zwei grundlegende Verfahrensarten untergliederbar. MSG-Schweißverfahren zeichnen sich dadurch aus, dass der Lichtbogen zwischen einer abschmelzenden Elektrode, die gleichzeitig einen Schweißzusatz darstellt, und dem in Bearbeitung befindlichen Werkstück brennt. Beim WIG-Schweißen hingegen wird mit einer nicht abschmelzenden Elektrode gearbeitet.

Löten unterscheidet sich vom Schweißen dadurch, dass beim Löten mit einem Zusatzwerkstoff, dem Lot, gearbeitet wird, dessen Schmelzpunkt unterhalb der Schmelztemperatur des Grundwerkstoffs liegt. Lötverfahren können analog zu den oben vorgestellten Schweißverfahren in Gruppen unterteilt werden. Je nachdem, ob es sich um ein Schweißverfahren oder um ein Lötverfahren handelt, kann der hier als Lichtbogenstrom bezeichnete Strom ein Schweißstrom oder ein Lötstrom sein.

Schweiß- und Lötgeräte existieren sowohl in Varianten die zur manuellen Bedienung vorgesehen sind als auch in Form von Schweiß- oder Lötrobotern.

Der zum Schweißen bzw. Löten eingesetzte Lichtbogen bewirkt, dass das den Lichtbogen umgebende Gas, beispielsweise Luft, Schutzgas oder ein anderes Gas, ionisiert wird. Es entsteht Plasma, das auch als Plasmaflamme bezeichnet wird. Abhängig von der Energiezufuhr zur Elektrode und damit zum Lichtbogen kann sich die Ausdehnung der Plasmaflamme verändern. Allgemein ruft eine erhöhte Energiezufuhr eine Vergrößerung der Plasmaflamme hervor. Durch Ausdehnung und Kontraktion der Plasmaflamme können Schallwellen in der die Flamme umgebenden Luft angeregt werden. Wird also die Energiezufuhr mittels einer Amplitudenmodulation des Lichtbogenstroms moduliert und liegt die Modulationsfrequenz im hörbaren Bereich, ist es möglich, dass der Bediener des Schweiß- oder Lötgeräts den mittels des Lichtbogens erzeugten Schall wahrnehmen kann. Natürlich kann auch über eine Variation der Lichtbogenspannung eine Schwingung der Plasmaflamme erzeugt und damit die Abstrahlung von Schall erreicht werden. Gemäß des Ohmschen Gesetzes geht dies jedoch mit einer Variation des Lichtbogenstroms einher, wenn nicht auch der Widerstand entsprechend variiert wird. Im Folgenden wird daher der Übersichtlichkeit halber auf den Lichtbogenstrom Bezug genommen.

Aus der DE 40 06 202 C1 und der DE 196 16 921 C1 ist der Effekt der Schallabstrahlung durch die Plasmaflamme als für einen Schweißer belastend bekannt. Diese Druckschriften geben jedoch keinen Hinweis zu seiner vorteilhaften Ausnutzung. Auf der anderen Seite nutzen spezielle Lautsprechertypen diesen Effekt aus. Da nicht, wie bei anderen Lautsprechertypen üblich, eine Membran bewegt werden muss, ergeben sich besondere Möglichkeiten zur unverfälschten Wiedergabe hochfrequenter Audiosignale.

Das Schweißen oder Löten ist eine anspruchsvolle Aufgabe, die meist die volle Konzentration des Bedieners des Schweiß- oder Lötgeräts erfordert. Im Sinne eines guten Arbeitsergebnisses sollte daher der Bediener keiner Ablenkung ausgesetzt werden. Gleichzeit kann es jedoch wünschenswert sein, ihm während der Arbeit mit dem Schweiß- oder Lötgerät Informationen zukommen zu lassen, die für den Bediener nützlich sind. Derartige Informationen können beispielsweise Auskünfte über aktuelle Werte von Parametern, die sich auf den Schweiß- oder Lötprozess beziehen, umfassen. In diesen Fällen sollte die Informationsversorgung des Bedieners geschickt mit dem Ziel vereinbart werden, ihm zu erlauben, sich bestmöglich auf die Bedienung seines Arbeitsgeräts zu konzentrieren. Dies gilt gleichermaßen für den Bediener eines manuell geführten Schweiß- oder Lötgeräts wie für die Überwachung eines automatischen Schweiß- oder Lötprozesses.

In der Vergangenheit wurden Lösungen vorgeschlagen, die beinhalten, dass einem Schweißer Zahlenwerte von Schweißparametern akustisch vermittelt werden. Die DE 39 21 418 A1 lehrt dazu den Einsatz eines Lautsprechers oder eines Kopfhörers. Nachteilig ist dabei unter anderem, dass durch die Notwendigkeit, einen Lautsprecher oder Kopfhörer vorzusehen, die Fertigungskosten für ein entsprechendes Schweißgerät steigen.

Eine Aufgabe der vorliegenden Erfindung ist daher, eine Vorrichtung und ein Verfahren zum Lichtbogenschweißen oder Lichtbogenlöten der eingangs genannten Art dahingehend weiterzuentwickeln, dass die Versorgung eines Bedieners mit Informationen auf akustischem Weg ermöglicht wird, ohne dass dazu gesonderte Schallabstrahlmittel vorgesehen werden müssen.

Diese Aufgabe wird erfindungsgemäß bei einer Vorrichtung und einem Verfahren zum Lichtbogenschweißen oder Lichtbogenlöten der eingangs genannten Art dadurch gelöst, dass im Verlauf des Wechselstroms, der dem von dem Leistungsteil bereitgestellten Lichtbogenstrom überlagert wird, eine Information codiert ist.

Beispielhafte Ausführungsformen der vorliegenden Erfindung machen sich die durch den Lichtbogen hervorgerufene Schallabstrahlung gezielt zu Nutze. Eine Modulatorschaltung ist konfiguriert, dem von einem Leistungsteil bereitgestellten Lichtbogenstrom (Schweißstrom oder Lötstrom) einen Wechselstrom mit einer im hörbaren Bereich liegenden Frequenz zu überlagern. Auf diese Weise kann es ermöglicht werden, die vom Lichtbogen hervorgerufene Schallabstrahlung aktiv zu gestalten. Hierzu sei angemerkt, dass die tiefste vom Menschen wahrnehmbare Frequenz häufig mit 20 Hz und die höchste mit 20 kHz angesetzt werden. Für einige Personen liegen jedoch auch außerhalb dieses Bereichs hörbare Frequenzen. Die Überlagerung des von einem Leistungsteil bereitgestellten Lichtbogenstroms mit einem Wechselstrom kann insbesondere bedeuten, dass sich der Verlauf des überlagerten Wechselstroms im Verlauf des Lichtbogenstroms niederschlägt. Die Amplitude des überlagerten Wechselstroms kann gering im Vergleich zur Amplitude des Lichtbogenstroms sein, so dass aufgrund des überlagerten Wechselstroms im Wesentlichen keine nachteiligen Auswirkungen auf das Schweiß- oder Lötergebnisse resultieren.

Erfindungsgemäß ist im Verlauf des Wechselstroms, der dem von dem Leistungsteil bereitgestellten Lichtbogenstrom überlagert wird, eine Information codiert. Es kann sich dabei um jede beliebige Art von Information handeln, d.h. es gelten keinerlei Einschränkungen bezüglich der Bedeutung der Information. Zum Zweck der Codierung der Information kann die Modulatorschaltung einen Signaleingang aufweisen. Sie kann konfiguriert sein, den Verlauf des Wechselstroms, der dem von dem Leistungsteil bereitgestellten Lichtbogenstrom überlagert wird, in Abhängigkeit des an dem Signaleingang anliegenden Signals zu gestalten. So kann erreicht werden, dass verschiedene Wechselströme aufmoduliert werden und damit verschiedene akustische Signale ausgegeben werden können.

Um nur ein denkbares Beispiel für die im Verlauf des Wechselstroms codierte Information zu nennen, sei exemplarisch die aktuelle Uhrzeit genannt. Dies kann nützlich sein, da somit der Bediener des Schweiß- oder Lötgeräts davon befreit wird, seinen Blick einer Uhr zuzuwenden um zu erfahren, wie spät es ist. Eine mögliche Art, eine Uhrzeit im Verlauf des Wechselstroms, der dem von dem Leistungsteil bereitgestellten Lichtbogenstrom überlagert wird, zu codieren, kann sein, dem Lichtbogenstrom eine der jeweiligen Stunde entsprechende Anzahl von Signaltönen aufzumodulieren. Gefolgt von einer Unterbrechung, die signalisiert, dass bald darauf eine Information bezüglich der Minuten ausgegeben werden wird, kann in gleicher Weise ein über die Minuten Auskunft gebendes Signal dem Bediener des Lichtbogenschweiß- oder Lötgeräts mitgeteilt werden.

Der Beginn einer dem Bediener des Schweiß- oder Lötgeräts zugewiesenen Pause ist nur eine von vielen weiteren im Verlauf des Wechselstroms codierbaren Informationen. Hier kann ein einzelner Signalton ausreichen. Die Beschaffenheit des Signaltons kann beliebig sein. Anders ausgedrückt kann der zeitliche Verlauf des Wechselstroms, der dem von dem Leistungsteil bereitgestellten Lichtbogenstrom überlagert wird, beliebig sein.

Um das Verständnis des im Verlauf dieses Wechselstroms codierten Signals auf der Seite des Bedieners zu erreichen, können entweder intuitiv verständliche Signale zum Einsatz kommen oder es kann dem Bediener zuvor in anderer Weise zugänglich gemacht werden, welches Codierungsschema verwendet wird. So ist denkbar, in einer Anleitung schriftlich offenzulegen, welches akustische Signal welche Information codiert. Eine weitere Variante kann vorsehen, auf einem Webserver Aufzeichnungen der jeweiligen akustischen Signale zu hinterlegen und in schriftlicher Form ihre Bedeutung zu erläutern. Natürlich ist auch eine in die Audiowiedergabe der Signale eingebettete gesprochene Beschreibung der damit codierten Information durchführbar.

Gemäß einer Ausführungsform der vorliegenden Erfindung umfasst die Modulatorschaltung einen Sprachsignalgenerator. Ein Sprachsignalgenerator kann in der Lage sein, den Verlauf eines elektrischen Wechselstroms vorzugeben, der dem eines Sprachsignals entspricht. Daher kann die Wiedergabe von Sprache über den Lichtbogen und die Plasmaflamme ermöglicht werden. Ein Vorteil dieser Ausführungsform kann darin zu sehen sein, dass über ein Sprachsignal ein unmittelbares Verständnis der darin codierten Information erreichbar ist. Bezugnehmend auf das obige Beispiel der Mitteilung einer Uhrzeit an den Bediener eines Lichtbogenschweiß- oder Lichtbogenlötgeräts kann somit zugunsten der intuitiven Verständlichkeit eine Durchsage der Uhrzeit in Worten erfolgen.

Ausführungsbeispielen der Erfindung gemäß ist der Sprachsignalgenerator hinsichtlich der zu verwendenden Sprache konfigurierbar. Dies kann die Möglichkeit für einen Bediener des erfindungsgemäßen Lichtbogenschweiß- oder Lichtbogenlötgeräts eröffnen, seine Landessprache auszuwählen und somit auf akustischem Weg mit für ihn verständlichen Informationen versorgt zu werden. Für den Hersteller eines solchen Geräts kann dies ebenfalls nützlich sein, da es ohne die Notwendigkeit von Modifikationen in unterschiedliche Sprachräume geliefert werden kann, woraus Kostenvorteile entstehen können.

Weiteren Ausgestaltungen der vorliegenden Erfindung gemäß können Mittel zur Einstellung eines Amplitudenskalierungsfaktors des Wechselstroms vorgesehen sein. Die Amplitude des Wechselstroms kann das Volumen der Plasmaflamme beeinflussen. Größere Volumenschwankungen können eine erhöhte Abgabe an mechanischer Energie an die Umgebungsluft bedeuten und so die Lautstärke des abgestrahlten Schalls ansteigen lassen. Für den Bediener kann es eine Steigerung des Komforts bedeuten wenn er in die Lage versetzt wird, eigenmächtig über die Lautstärke zu entscheiden. Eine denkbare Implementierung eines Mittels zur Einstellung eines Amplitudenskalierungsfaktors des Wechselstroms ist eine Verstärkerschaltung mit wählbarem Verstärkungsfaktor.

Varianten der Erfindung können vorsehen, dass die im Verlauf des Wechselstroms codierte Information Parameter des Schweißprozesses beziehungsweise des Lötprozesses betrifft. Dabei werden keine Einschränkungen gemacht, die bestimmte Parameter des Schweißprozesses beziehungsweise Lötprozesses ausschließen. Einige wenige beispielhafte Parameter eines Schweißprozesses sind die Schweißstromstärke, die Schweißspannung, die Schweißgeschwindigkeit, die Drahtvorschubgeschwindigkeit und die Temperatur des Schweißbrenners. Zu den Parametern des Schweißprozesses zählen definitionsgemäß auch alle die Parameter, die am Schweißgerät einstellbar sind. Gleiches gilt im Bezug auf Lichtbogenlötgeräte. Ein Vorteil dieser Varianten der vorliegenden Erfindung kann sein, dass dem Bediener des Schweiß- oder Lötgeräts, ohne seine Aufmerksam zu sehr von seiner Aufgabe abzulenken, von ihm gewählte Einstellungen ins Bewusstsein gerufen werden, was eine kritische Reflexion darüber erlaubt, ob diese Einstellungen zum jeweiligen Zeitpunkt noch der auszuführenden Schweiß- oder Lötaufgabe angemessen sind. Gegebenenfalls kann der Bediener in der Folge eine Korrektur der Einstellungen vornehmen. Die Informationen können ihm auf akustischem Weg mitgeteilt werden, so dass sein Blick auf das Werkstück gerichtet bleiben kann. Die Ablenkung des Bedieners von seiner eigentlichen Aufgabe kann hierdurch auf ein Mindestmaß reduziert werden. Gleichzeitig ist es nicht nötig, einen Lautsprecher vorzusehen.

Exemplarische Ausführungsformen der vorliegenden Erfindung zeichnen sich dadurch aus, dass eine mit der Modulatorschaltung gekoppelte Messeinrichtung zur Messung mindestens eines Parameters des Schweißprozesses beziehungsweise des Lötprozesses vorgesehen ist. Es kann sich so die Möglichkeit ergeben, Werte von Parametern des Schweiß- oder Lötprozesses zu bestimmen und sie mittels der Modulatorschaltung im Verlauf des Wechselstroms, der dem von dem Leistungsteil bereitgestellten Lichtbogenstrom überlagert wird, zu codieren. Auf diese Weise kann eine Überwachung von Parametern des Schweiß- oder Lötprozesses in Echtzeit ermöglicht werden. Anders ausgedrückt eröffnen die hier diskutierten Ausführungsformen der Erfindung die Möglichkeit, dem Bediener nicht nur voreingestellter Sollwerte der durch die Messeinrichtung analysierten Parameter des Schweiß- oder Lötprozesses mitzuteilen, sondern auch deren Istwerte zu kommunizieren. Daraus wiederum kann erwachsen, dass dem Bediener erlaubt wird, auf die mitgeteilten Informationen zu reagieren und auf die entsprechenden Parameter des Schweiß- oder Lötprozesses einzuwirken, so dass sich Soll- und Istwerte aneinander annähren. In der Folge kann sich ein verbessertes Schweiß- oder Lötresultat einstellen.

Gemäß einer weiteren Ausführungsform der Erfindung kann der Modulatorschaltung ein Komparator zugeordnet sein, der konfiguriert ist, einen Vergleich zwischen einem Soll- und einem Istwert eines Parameters des Schweißprozesses beziehungsweise des Lötprozesses durchzuführen und ein entsprechendes Ausgangssignal zu liefern. Hierdurch kann sich der Vorteil ergeben, dass die Modulatorschaltung veranlasst wird, dem von dem Leistungsteil bereitgestellten Lichtbogenstrom einen Wechselstrom zu überlagern, in dem die Differenz von Soll- und Istwert codiert ist. Dadurch kann dem Bediener des Schweiß- oder Lötgeräts eine angemessene Reaktion auf das Verhältnis von Istwert und Sollwert eines betroffenen Parameters erleichtert werden. So kann er gegenüber der separaten akustischen Umsetzung des Istwertes und des Sollwertes direkt deren Differenz vermittelt bekommen, was ihm die Verrechnung von Soll- und Istwert erspart. Auch der Fall, dass dem Bediener akustisch mitgeteilt wird, dass beispielsweise die Schweißgeschwindigkeit zu erhöhen ist, bedeutet, dass im Verlauf des Wechselstroms die Differenz von Soll- und Istwert eines Parameters, der den Schweißprozess betrifft, codiert ist, denn die entsprechende Anweisung an den Schweißer resultiert aus dem Vergleich von Soll- und Istwert und gibt daher deren Verhältnis zueinander wieder.

Varianten der Erfindung beinhalten, dass der Modulatorschaltung ein Regler zugeordnet ist. Beispielsweise kann ein Ausgangssignal der Modulatorschaltung auf diese Weise an einen Regler geleitet werden, der die Aufgabe übernimmt, Parameter wie den Schweiß- oder Lötstrom, eine entsprechende Spannung oder bei Schweiß- bzw. Lötrobotern auch die Schweißgeschwindigkeit zu regeln. Zu diesem Zweck kann auch die oben erläuterte, mit der Modulatorschaltung gekoppelte Messeinrichtung zur Messung mindestens eines Parameters des Schweißprozesses beziehungsweise des Lötprozesses die benötigten Istwerte der jeweiligen Parameter liefern. Als ein Vorteil derartiger Varianten der vorliegenden Erfindung ist die Möglichkeit zur direkten Einbeziehung des gewünschten Verlaufs des Wechselstroms, der als Informationsträger dient und der dem Lichtbogenstrom überlagert werden soll, in eine Führungsgröße für den Regler zu nennen. Bei der Ermittlung einer entsprechenden Stellgröße kann so der gewünschte Verlauf des zu überlagernden Wechselstroms ebenfalls berücksichtigt werden. Dies kann zu einem besseren Regelverhalten gegenüber Lösungsansätzen führen, die mit einer Steuervorrichtung zur Überlagerung des Wechselstroms arbeiten, die einem möglicherweise ohnehin vorgesehenen Regler nachgeschaltet ist. Auf diese Weise können folglich auch Komponenten eingespart und Kosten reduziert werden.

Exemplarische Ausgestaltungen der Erfindung sehen vor, dass die Art der im Verlauf des Wechselstroms codierten Information einstellbar ist. Zum Beispiel ist vorstellbar, dass ein Bediener eines erfindungsgemäßen Lichtbogenschweiß- oder Lichtbogenlötgeräts durch Tastendruck am Gerät auswählt, welche Parameter des Schweiß- oder Lötprozesses sowie andere Informationen ihm mitzuteilen sind. So kann der Bediener das Gerät optimal an seine Bedürfnisse anpassen. Dabei sind alle erdenklichen Kombinationen von Daten, die akustisch codiert an den Bediener übertragen werden, möglich.

Gemäß weiteren Ausführungsformen der Erfindung ist ein Zeitgeber vorgesehen, der die Modulatorschaltung steuert. So kann erreicht werden, dass ein Zeitschema vorgebbar ist, gemäß dem der Wechselstrom dem Lichtbogenstrom überlagert wird. Beispielsweise kann dann eingestellt werden, dass alle 30 Sekunden ein bestimmter, im Verlauf eines Wechselstroms codierter Parameter des Schweiß- oder Lötprozesses dem von dem Leistungsteil bereitgestellten Lichtbogenstrom überlagert und so dem Bediener des Schweiß- oder Lötgeräts hörbar gemacht wird. Eine andere Variante ist, den Zeitgeber zu verwenden, um die Überlagerung eines Wechselstroms erst nach Ablauf einer bestimmten Zeitspanne nach dem Einschalten des Schweiß- bzw. Lötgeräts einsetzten zu lassen.

Zusätzliche Varianten der vorliegenden Erfindung umfassen, dass die Modulatorschaltung mit einem Taster eines Schweißbrenners beziehungsweise eines Lötbrenners gekoppelt ist. So kann erreicht werden, dass automatisch mit der Überlagerung des Wechselstroms, in dessen Verlauf eine Information codiert ist, begonnen wird, sobald ein Schweiß- oder Lötvorgang eingeleitet wird. Im Zusammenspiel mit einem Zeitgeber kann die Überlagerung auch erst mit einem gewissen Versatz zum Betätigungszeitpunkt des Tasters einsetzen.

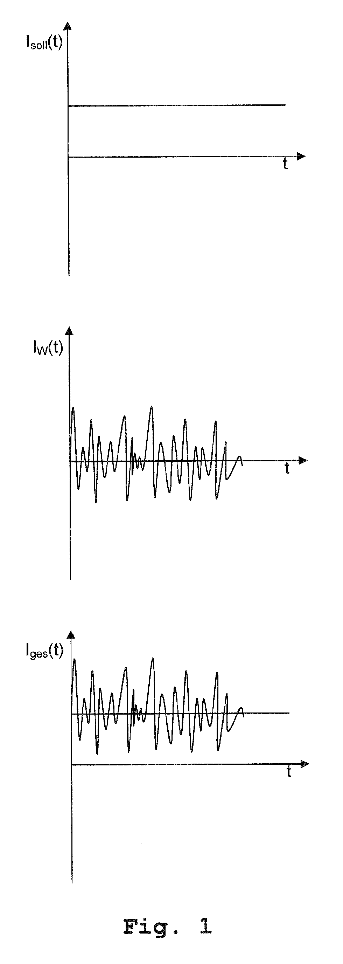

Die Erfindung wird im Folgenden anhand zweier ein Ausführungsbeispiel beschreibender Zeichnungen näher erläutert:
Dabei zeigen
Fig. 1 eine schematische Darstellung des zeitlichen Verlaufs eines Sollschweißstromes, des zeitlichen Verlaufs eines Wechselstroms, in dem eine Information codiert ist, und des Verlaufs eines von einem Leistungsteil bereitgestellten Schweißstroms, wie er sich durch Überlagerung des Wechselstroms gemäß eines Ausführungsbeispiels einer erfindungsgemäßen Vorrichtung und eines erfindungsgemäßen Verfahrens ergeben kann;

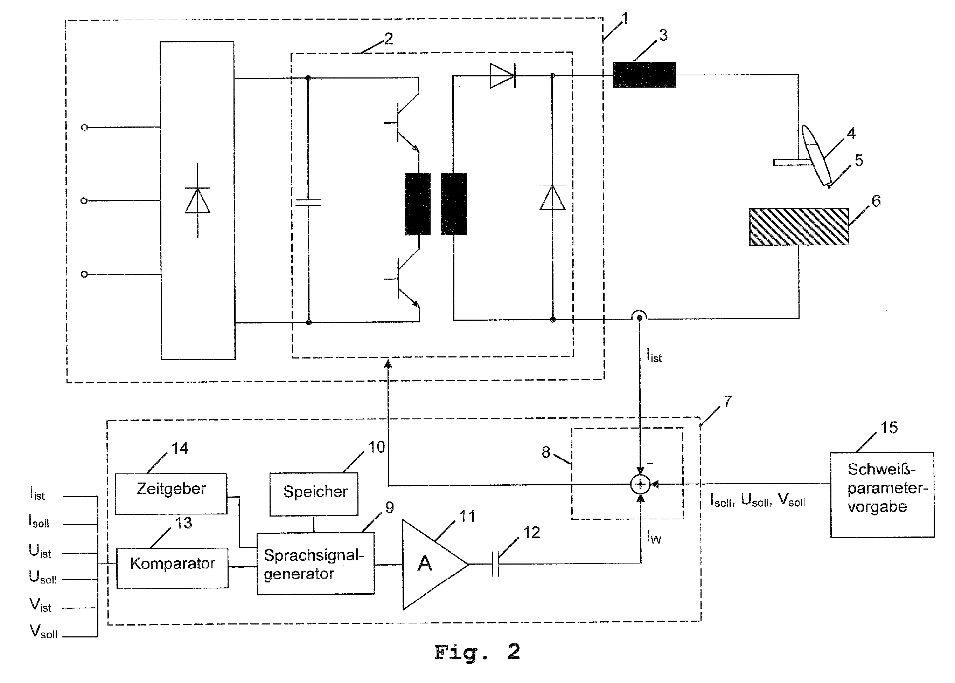

Fig. 2 eine schematische Darstellung eines Ausführungsbeispiels eines erfindungsgemäßen Lichtbogenschweißgeräts, mit dem sich die in Fig. 1 dargestellten Stromverläufe realisieren lassen.

Fig. 1 zeigt eine schematische Darstellung des zeitlichen Verlaufs eines Sollschweißstromes Iₛₒₗₗ(t), des zeitlichen Verlaufs eines Wechselstroms I_{w}(t), in dem eine Information codiert ist, und des Verlauf eines von einem Leistungsteil bereitgestellten Schweißstromes I_{ges}(t), wie er sich durch Überlagerung des Wechselstroms I_{w}(t) gemäß eines Ausführungsbeispiels einer erfindungsgemäßen Vorrichtung und eines erfindungsgemäßen Verfahrens ergeben kann.

Das an dieser Stelle diskutierte Ausführungsbeispiel bezieht sich auf ein Lichtbogenschweißgerät und ein Lichtbogenschweißverfahren. Gewünscht wird zunächst ein zeitlich konstanter Sollschweißstromes Iₛₒₗₗ(t), wie er in der oberen Zeichnung von Fig. 1 wiedergegeben ist. Um einen konstanten Stromverlauf zu verwirklichen, kann zum Beispiel ein Regler verwendet werden, der auf der Basis eines Istwerts des Schweißstromes Iᵢₛₜ(t) einen entsprechenden Stellwert ermittelt.

In der mittleren Zeichnung von Fig. 1 ist der Verlauf eines Wechselstroms I_{w}(t) gezeigt. Darin ist eine Information codiert. Sie kann beispielsweise Parameter des Schweißprozesses betreffen. Erzeugt werden kann der Wechselstrom I_{w}(t) mit einer Modulatorschaltung. Diese kann zudem eingesetzt werden, um die Überlagerung des Schweißstromes I_{ges}(t) mit dem Wechselstrom I_{w}(t) zu realisieren.

Die untere Zeichnung in Fig. 1 zeigt schließlich das Ergebnis einer solchen Überlagerung. Es ergibt sich der Verlauf des Schweißstromes I_{ges}(t) als Summe der Ströme Iₛₒₗₗ(t) und I_{w}(t). Die Zeichnung ist nicht maßstabsgetreu. Insbesondere kann die Amplitude des Wechselstroms I_{w}(t) deutlich kleiner sein als die Stromstärke des Sollschweißstroms Iₛₒₗₗ(t). Bei einem Lichtbogenschweißgerät kann der Schweißstrom I_{ges}(t) der Strom sein, der durch die Elektrode fließt und damit dem Schweißprozess zur Verfügung gestellt wird. Somit ändert sich die Energie, die dem Schweißprozess zur Verfügung steht, gemäß des Verlaufs des Wechselstroms I_{w}(t). Dadurch verändert sich die Ausdehnung der durch den Lichtbogen erzeugten Plasmaflamme entsprechend. Sie regt in der sie umgebenden Luft wiederum Longitudinalwellen an, so dass Schall abgestrahlt wird. Somit kann für den Bediener die im Verlauf des Wechselstrom I_{w}(t) codierte Information hörbar gemacht werden. Analoge Erklärungen gelten für das Lichtbogenlöten.

Fig. 2 zeigt eine schematische Darstellung eines Ausführungsbeispiels eines erfindungsgemäßen Lichtbogenschweißgeräts, mit dem sich die in Fig. 1 dargestellten Stromverläufe realisieren lassen.

Gemäß Fig. 2 umfasst das Lichtbogenschweißgerät ein Leistungsteil 1, das wiederum einen Schweißinverter 2 beinhaltet. Über ein Glättungsglied 3 wird die Elektrode 5 eines Lichtbogenschweißbrenners 4 mit Energie versorgt. Mittels des Lichtbogenschweißbrenners 4 kann somit ein Werkstück 6, das gleichzeitig eine Gegenelektrode darstellt, bearbeitet werden. Des Weiteren ist eine Modulatorschaltung 7 vorgesehen. Ihr ist ein Regler 8 zugeordnet. Darüber hinaus umfasst sie einen Sprachsignalgenerator 9, einen Speicher 10, eine Verstärkerschaltung 11 mit wählbarem Verstärkungsfaktor A, einen Kondensator 12, einen Komparator 13 sowie einen Zeitgeber 14. Zudem ist eine Schweißparametervorgabeeinheit 15 vorgesehen.

Der Regler 8 umfasst eine Messeinrichtung (nicht gezeigt) zur Messung mindestens eines Parameters des Schweißprozesses. Wie in der Zeichnung dargestellt, kann es sich dabei um den Istwert des Schweißstromes Iᵢₛₜ handeln. Aber auch andere Parameter des Schweißprozesses können mittels einer entsprechend konfigurierten Messeinrichtung bestimmt werden. Darunter fallen zum Beispiel die Schweißspannung Uᵢₛₜ, die Schweißgeschwindigkeit Vᵢₛₜ oder die Temperatur des Brenners 4. Da der Regler 8 der Modulatorschaltung 7 zugeordnet ist und die Messeinrichtung umfasst, ist auch die Modulatorschaltung 7 mit der Messeinrichtung gekoppelt.

Sollwerte der Parameter des Schweißprozesses können durch die Schweißparametervorgabeeinheit 15 vorgegeben werden. Diese wiederum kann die Sollwerte auch ganz oder teilweise vom Bediener des Lichtbogenschweißgeräts erhalten. Die Schweißparametervorgabeeinheit 15 wirkt auf den Regler 8 ein. So kann der Regler 8 verschiedene Parameter des Schweißprozesses regeln. Als einige exemplarische Parameter seien hier die Schweißspannung U, der Schweißstrom I und bei einem Schweißroboter auch die Schweißgeschwindigkeit V genannt.

Die Modulatorschaltung 7 verfügt über einen Signaleingang, über den ihr Soll- und Istwerte von Parametern des Schweißprozesses zugeführt werden können, wie in der Zeichnung exemplarisch für den Schweißstrom I, die Schweißspannung U und die Schweißgeschwindigkeit V dargestellt. In dem hier beschriebenen Ausführungsbeispiel geschieht dies über den Komparator 13, der konfiguriert ist, einen Vergleich zwischen einem Soll- und einem Istwert eines Parameters des Schweißprozesses durchzuführen und ein entsprechendes Ausgangssignal zu liefern. Über die Messeinheit des Reglers 8 sowie über die Schweißparametervorgabeeinheit 15 können ihm dazu die benötigten Soll- und Istwerte zugeführt werden. Das Ausgangsignal des Komparators 13 wird auf den Sprachsignalgenerator 9 gegeben, der in Abhängigkeit von diesem Signal ein in einem elektrischen Wechselstrom codiertes Sprachsignal erzeugt. Dazu kann der Sprachsignalgenerator beispielsweise einen Prozessor (nicht gezeigt) umfassen. Für die Spracherzeugung benötigte Daten, wie abgespeicherte Silben und Vorgaben wie diese bei einem bestimmten Ausgangssignals des Komparators 13 zu verketten sind, kann der Sprachsignalgenerator 9 aus dem Speicher 10 auslesen. Insbesondere können dort Daten hinterlegt sein, die verschiedenen Sprachen zugeordnet sind. Damit kann erreicht werden, dass der Sprachsignalgenerator hinsichtlich der zu verwendenden Sprache konfigurierbar ist und so das durch das Lichtbogenschweißgerät erzeugte akustische Signal an die Wunschsprache des Schweißers angepasst werden kann.

Die Art der im Verlauf des Wechselstroms I_{w} codierten Information ist einstellbar. Dazu kann der Schweißer entsprechende Einstellung an dem Lichtbogenschweißgerät vornehmen und bestimmen, welche Informationen ihm mitgeteilt werden. Zum Beispiel kann er entscheiden, ob er den Sollwert des Schweißstroms Iₛₒₗₗ, den Istwert Iᵢₛₜ oder die Differenz dieser beiden Werte ausgeben lassen möchte. Auch eine Anweisung wie die, dass die Schweißgeschwindigkeit erhöht werden sollte, kann im Verlauf des Wechselstroms I_{w} codiert sein. Natürlich kann auch eingestellt werden, dass eine Kombination dieser Parameter codiert wird.

Der Zeitgeber 14 steuert die Modulatorschaltung 7 dahingehend, dass er festlegt, wann der Sprachsignalgenerator 9 ein Signal ausgibt. Zudem kann vorgesehen sein, dass die Modulatorschaltung 7 mit einem Taster des Schweißbrenners 4 gekoppelt ist. Dann kann beispielsweise im Zusammenspiel mit dem Zeitgeber 14 erreicht werden, dass die Überlagerung des Wechselstroms I_{w} mit einem gewissen zeitlichen Versatz zum Betätigungszeitpunkt des Tasters einsetzt.

Das Ausgangssignal des Sprachsignalgenerators 9 wird durch die Verstärkerschaltung 11 verstärkt. Der Verstärkungsfaktor A ist dabei wählbar. Die Amplitude des Ausgangssignals des Sprachsignalgenerators 9 wird mit dem Verstärkungsfaktor A multipliziert. Daher ist die Verstärkungsschaltung 11 als Mittel zur Einstellung eines Amplitudenskalierungsfaktors des Wechselstroms I_{w} zu sehen. Da der Wechselstrom I_{w} ein Sprachsignal darstellt, liegt seine Frequenz im hörbaren Bereich.

Über den Kondensator 12 wird das Ausgangssignal der Verstärkungsschaltung 11 dem Regler 8 zugeführt. Dort wird der auf diese Weise vorgegebene Wechselstrom I_{w}, in dessen Verlauf eine Information codiert ist und der dem Lichtbogenstrom überlagert werden soll, dem Lichtbogenstromsollwert Iₛₒₗₗ aufaddiert. Aus dieser Summe und dem Istwert des Lichtbogenstroms Iᵢₛₜ ermittelt der Regler 8 eine Stellgröße für das Leistungsteil 1, die bewirkt das sich der Lichtbogenstrom I_{ges} einstellt, dem der Wechselstrom I_{w} überlagert ist. Folglich wird das Volumen der Plasmaflamme des Lichtbogens, der von der Elektrode 5 des Schweißbrenners 4 ausgeht, entsprechend des Verlaufs des Wechselstroms I_{w} moduliert und ein akustisches Signal erzeugt. Da im Verlauf des Wechselstroms I_{w} eine Information codiert ist, wird diese hörbar.

Dem Schweißer kann so eine Information akustisch mitgeteilt werden, was erlaubt, dass er zur Informationsaufnahme seinen Blick nicht von dem zu bearbeitenden Werkstück 6 abwenden muss. Dadurch, dass die ohnehin vorhandene Plasmaflamme für die Schallerzeugung benutzt wird, entstehen keine zusätzlichen Kosten für einen Lautsprecher. Werden dem Schweißer akustisch Parameter des Schweißprozesses mitgeteilt, kann er diese Informationen berücksichtigen und so gegebenenfalls ein besseres Schweißergebnis erzielen.

## Patentansprüche

1. Vorrichtung zum Lichtbogenschweißen oder Lichtbogenlöten mit einem Leistungsteil (1) und einer Modulatorschaltung (7), die konfiguriert ist, dem von dem Leistungsteil (1) bereitgestellten Lichtbogenstrom (I_{ges}) einen Wechselstrom (I_{w}) mit einer im hörbaren Bereich liegenden Frequenz zu überlagern, **dadurch gekennzeichnet, dass** im Verlauf des Wechselstroms (I_{w}) eine Information codiert ist.

2. Vorrichtung nach Anspruch 1, **dadurch gekennzeichnet, dass** Mittel (11) zur Einstellung eines Amplitudenskalierungsfaktors (A) des Wechselstroms (I_{w}) vorgesehen sind.

3. Vorrichtung nach einem der vorhergehenden Ansprüche, **dadurch gekennzeichnet, dass** die Modulatorschaltung (7) einen Sprachsignalgenerator (9) umfasst.

4. Vorrichtung nach Anspruch 3, **dadurch gekennzeichnet, dass** der Sprachsignalgenerator (9) hinsichtlich der zu verwendenden Sprache konfigurierbar ist.

5. Vorrichtung nach einem der vorhergehenden Ansprüche, **dadurch gekennzeichnet, dass** die im Verlauf des Wechselstroms (I_{w}) codierte Information Parameter (I, U, V) des Schweißprozesses beziehungsweise des Lötprozesses betrifft.

6. Vorrichtung nach einem der vorhergehenden Ansprüche, **dadurch gekennzeichnet, dass** eine mit der Modulatorschaltung (7) gekoppelte Messeinrichtung zur Messung mindestens eines Parameters (Iᵢₛₜ) des Schweißprozesses beziehungsweise des Lötprozesses vorgesehen ist.

7. Vorrichtung nach Anspruch 6, **dadurch gekennzeichnet, dass** der Modulatorschaltung (7) ein Komparator (13) zugeordnet ist, der konfiguriert ist, einen Vergleich zwischen einem Soll- (Iₛₒₗₗ, Uₛₒₗₗ, Vₛₒₗₗ) und einem Istwert (Iᵢₛₜ, Uist, Vᵢₛₜ) eines Parameters des Schweißprozesses beziehungsweise des Lötprozesses durchzuführen und ein entsprechendes Ausgangssignal zu liefern.

8. Vorrichtung nach einem der vorhergehenden Ansprüche, **dadurch gekennzeichnet, dass** der Modulatorschaltung (7) ein Regler (8) zugeordnet ist.

9. Vorrichtung nach einem der vorhergehenden Ansprüche, **dadurch gekennzeichnet, dass** die Art der im Verlauf des Wechselstroms (I_{w}) codierten Information einstellbar ist.

10. Vorrichtung nach einem der vorhergehenden Ansprüche, **dadurch gekennzeichnet, dass** ein Zeitgeber (14) vorgesehen ist, der die Modulatorschaltung (7) steuert.

11. Vorrichtung nach einem der vorhergehenden Ansprüche, **dadurch gekennzeichnet, dass** die Modulatorschaltung (7) mit einem Taster eines Schweißbrenners (4) beziehungsweise eines Lötbrenners gekoppelt ist.

12. Verfahren zum Schweißen oder Löten unter Verwendung eines Lichtbogenschweißgeräts oder Lichtbogenlötgeräts mit einem Leistungsteil (1) und einer Modulatorschaltung (7) umfassend:
- Überlagerung des von dem Leistungsteil (1) bereitgestellten Lichtbogenstroms (I_{ges}) mit einem Wechselstrom (I_{w}) mit einer im hörbaren Bereich liegenden Frequenz mittels der Modulatorschaltung (7), **dadurch gekennzeichnet, dass** im Verlauf des Wechselstroms (I_{w}) eine Information codiert ist.
